# EUROPÄISCHE PATENTSCHRIFT

(11) **EP 1 702 733 B1**
(45) Veröffentlichungstag und Bekanntmachung des Hinweises auf die Patenterteilung: **03.05.2017**
(21) Anmeldenummer: 06005289.1
(22) Anmeldetag: 15.03.2006
(51) Int. Cl.: B29C 67/00, B26F 1/38, B26F 1/14, B60R 19/48

(54) **Prägestanzen von Kunststoffen mit höchster Genauigkeit**
Formpunching of plastics with high-precision
Poinçonnage et formage avec haute precision de matières plastiques

(30) Priorität: 18.03.2005 DE 102005013072
(43) Veröffentlichungstag der Anmeldung: 20.09.2006
(73) Patentinhaber: Plastic Omnium Automotive Exteriors GmbH, 80807 München (DE)
(72) Erfinder: Albert, Bruno, 90763 Fürth (DE)
(74) Vertreter: Lavoix

(56) Entgegenhaltungen:
- EP-A2- 1 342 626
- DE-A1- 10 239 452
- DE-A1- 10 239 453
- DE-A1- 19 748 407
- JP-A- 9 217 836

## Beschreibung

Die Erfindung betrifft ein Kunststoffteil nach dem Oberbegriff des Anspruchs 1, ein Werkzeug zum Prägestanzen und ein zugehöriges Verfahren.

Es ist bekannt, z. B. aus der EP 1 342 626 A2, im vorderen und/oder hinteren Stoßfänger Durchbrüche z. B. für die Ultraschall-Parksensoren (PDC, Park-Distance-Control) einzubringen. Hierzu werden die Befestigungen der Sensoren an den Stoßfänger im Herstellungsverfahren angeformt. Auf Grund unterschiedlicher Varianten der Stoßfänger werden auch mehrere Spritzwerkzeuge benötigt, wobei Lagerung, Handling, Montage einen großen Kostenfaktor darstellen.

Ein weiteres Problem stellen die Durchbrüche für die Parksensoren dar, da die Parksensoren keinen Kontakt zum Stoßfänger haben sollten, jedoch auch kleinste unterschiedliche Beabstandungen des Außenumfangs der Parksensoren zum Stoßfänger sichtbar sind.

Beim Spritzgießen stellen die Kerne, die die Durchbruchskontur im Kunststoffteil erzeugen, ein Fließhindernis für die Kunststoffschmelze dar. Das Zusammenfließen der laminar fließenden Schmelzströme führt unweigerlich zu Bindenähten im Spritzteil bzw. den damit verbundenen Problemen wie Fehlstellen, geringe Festigkeiten, optische Beeinträchtigungen. Zum anderen sind die oben genannten Durchbrüche nur in bestimmten Ausstattungsvarianten der Fahrzeuge vorgesehen. Aus Wirtschaftlichkeitsgründen sollte die Variantenbildung jedoch relativ spät im Gesamtprozess erfolgen, also ein späteres Erzeugen der Durchbrüche ist kostengünstiger als das Spritzgießen von unterschiedlichen Bauteilvarianten mittels verschiedener Spritzgießwerkzeuge oder Wechseleinsätze (Rüstzeiten, Werkzeugverschleiß) in einem Betriebsteil.

Es besteht also das Problem, die Durchbrüche einzubringen.

Hierzu eignen sich prinzipiell sämtliche Bearbeitungsverfahren wie Bohren, Fräsen, Schleifen oder Stanzen. Jedoch engen Wirtschaftlichkeitsüberlegungen und andere Randbedingungen diese Auswahl in der Praxis stark ein. Besonders problematisch ist hierbei der Prozess der Lackierung der mit den Durchbrüchen versehenen Spritzgussteile, da sich Partikel wie Späne, Grat oder Feinstaub äußerst störend im Lackierungsprozess verhalten bzw. zu teuren Nacharbeitungsprozessen führen können.

Hinzu kommt, dass der Übergang der Durchbruchsinnenfläche zur -außenfläche (Sichtbereich) nicht scharfkantig sein darf, um einerseits Verletzungen zu vermeiden. Andererseits führt ein scharfkantiger Übergang unweigerlich zu einem Lackwulst um den Durchbruch herum, der durch den Lackiervorgang optisch noch verstärkt werden würde.

Eine weitere Problematik entsteht bei der Abformung eines Konus von der Innenseite des Stoßfängers. Beim Anformen des Konus von unten darf sich der verdrängte Kunststoff nicht nach oben in der Sichtfläche aufbauen, damit beim Lackieren keine Abzeichnungen im Sichtbereich erkennbar werden.

Der angebrachte Konus soll zentrisch zur Bohrung liegen, damit beim Einbau des Sensors kein Lageversatz mit dem Sensor entsteht.

Die Position der eingebauten Sensorachse zur Stanzachse sollte mit einer Toleranz von +/- 0,01 mm realisiert werden.

Oben genannte Anforderung und steigende optische Qualitätsanforderungen, sowie die Lage-Position der Sensoren in Verbindung mit den Designanforderungen nach möglichst großen, ungestörten Sichtflächen, erfordern die Suche nach einer kostengünstigen und qualitativen Lösung der dargstellten Probleme, um beliebige Durchbrüche wulstfrei mit ausreichend großem Übergangsradius und angeformtem Konus zu ermöglichen.

Entsprechend wurde diese Aufgabenstellung durch die Erfindung eines neuen selbstzentrierenden Präge-Stanz-Verfahrens und ein zugehöriges Werkzeug gelöst.

Ein erfindungsgemäßes Kunststoffteil mit einer Außenfläche und einer Innenfläche und mit Durchbrüchen höchster Genauigkeit zur Aufnahme von Anbauteilen, die über ein exaktes Spaltmaß in die Durchbrüche einsetzbar sein müssen, wobei der Übergang von der Durchbruchsinnenfläche zur Außenfläche des Kunststoffteils als Radius eingeprägt ist dadurch gekennzeichnet, dass der Übergang von der Durchbruchsinnenfläche zur Innenfläche des Kunststoffteils als Konus ausgebildet ist. Hierdurch ist die mögliche Anlagefläche für das Anbauteil minimiert.

Bevorzugt ist das Kunststoffteil ein Stoßfänger für Kraftfahrzeuge und das Anbauteil bevorzugt ein Parksensor.

Ein erfindungsgemäßes Werkzeug zum Prägestanzen des genannten Durchbruchs in einem Kunststoffteil ist dadurch gekennzeichnet,
- dass das Kunststoffteil mit einer anliegenden Schnittplatte auf dem Werkzeug verankerbar ist,
- dass das Werkzeug auf der Außenfläche des Kunststoffteils einen ersten Prägestempel zum Prägen eines Radius mit einem auf seiner Längsachse in Richtung zum Kunststoffteil hervorstehenden Vorlocher zum Einbringen einer Zentrierbohrung aufweist,
- dass der Vorlocher, bevor der erste Prägestempel in das Kunststoffteil eingreift, auf der zum Kunststoffteil gegenüberliegenden Seite in eine Lochführung in der Schnittplatte einfährt und dadurch der erste Prägestempel beim Prägen zentriert ist,
- dass der erste Prägestempel und damit der Vorlocher in seiner Endprägestellung für den Rest des Stanzprägens verankert bleibt,
- dass das Werkzeug auf der Innenfläche des Kunststoffteils einen zweiten Prägestempel zum Prägen des Konus aufweist, und der zweite Prägestempel auf seiner Längsachse eine an den Vorlocher angepasste Führungsbohrung aufweist,
   -dass der zweite Prägestempel mit seiner Führungsbohrung auf den Vorlocher auffährt und danach erst prägend das Kunststoffteil formt, und
- dass ein Stanzstempel zum Ausstanzen des nach dem Prägen mit den beiden Prägestempeln verbleibenden Mittelteils vorhanden ist.

Das Merkmal, dass das Kunststoffteil mit einer anliegenden Schnittplatte auf dem Werkzeug verankerbar ist, bedeutet auch, dass das Kunststoffteil auf dem Werkzeug verankert wird und anschließend eine Schnittplatte an die Stelle des Durchbruchs gefahren wird. Die Schnittplatte ist bevorzugt ein Stift mit einer zentrischen Lochführung.

Ein erfindungsgemäßes Verfahren zum Prägestanzen der genannten Durchbrüchen in Kunststoffteilen mit dem beschriebenen Werkzeug ist durch folgende Verfahrensschritte gekennzeichnet:
- Unverrückbares Einspannen des Kunststoffteils mit einer anliegenden Schnittplatte an der Stelle des vorgesehenen Durchbruchs.
- Einbringen einer Zentrierbohrung durch einen Vorlocher, dessen Durchmesser kleiner als der kleinste Durchmesser des zu schaffenden. Durchbruchs ist.
- Nach Einbringung der Zentrierbohrung Eintauchen des Vorlochers in eine Lochführung in der Schnittplatte.
- Prägen des Radius durch den ersten Prägestempel und Verbleiben des ersten Prägestempels und damit des Vorlochers in seiner Endprägestellung für den Rest des Stanzprägens.
- Auffahren des zweiten Prägestempels mit seiner Führungsbohrung auf den Vorlocher und anschließendes zentriertes Prägen des Konus auf der Innenfläche des Kunststoffteils.
- Ausstanzen des nach dem Prägen mit den beiden Prägestempeln verbleibenden Mittelteils.

In erfindungsgemäßer Ausgestaltung weist der Stanzstempel in Richtung zum Kunststoffteil einen hervorstehenden Sucherstift auf, der vor dem Stanzen in die Lochführung eingreift.

Weitere Merkmale der Erfindung ergeben sich aus der Figurenbeschreibung, die ein bevorzugtes Ausführungsbeispiel der Erfindung zeigt.

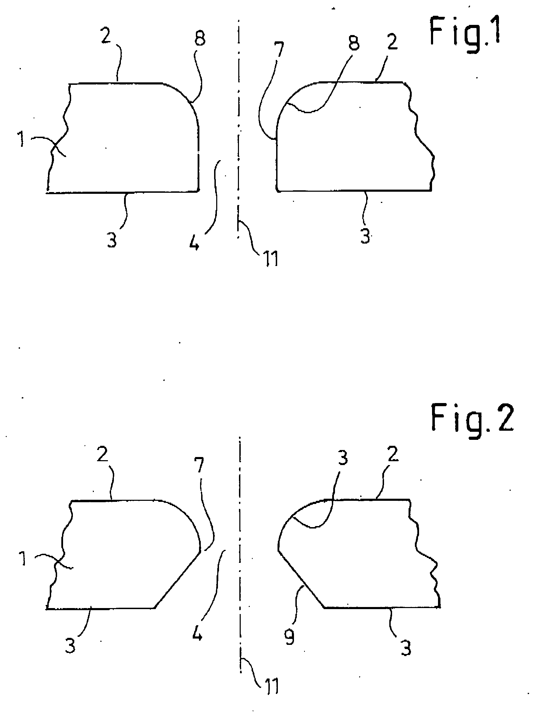

Figur 1 zeigt einen Durchbruch 4 für einen Parksensor in einem Stoßfänger nach dem Stand der Technik und Figur 2 nach dem erfindungsgemäßen Verfahren.

Beim erfindungsgemäßen Kunststoffteil ist der Parksensor durch den angeprägten Konus 9 im Stoßfänger freigeschnitten.

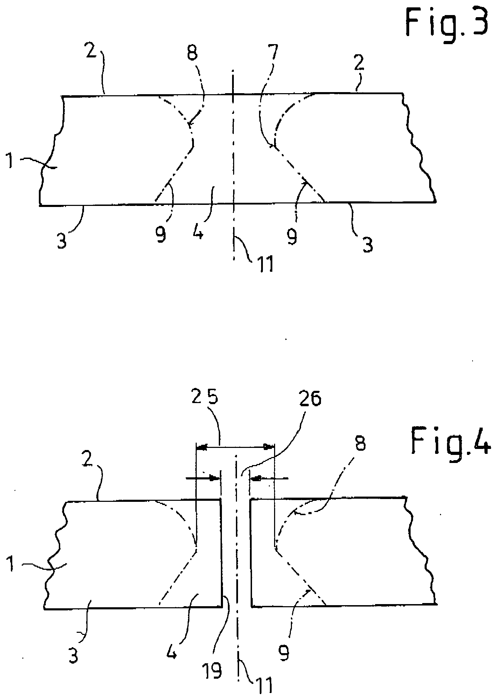

Figur 3 zeigt einen Ausschnitt aus einem Stoßfänger für Kraftfahrzeuge im Bereich eines Durchbruches 4 für einen Parksensor. Strichpunktiert ist der einzubringende Durchbruch 4 für den Parksensor gekennzeichnet. Von der Außenfläche 2 des Stoßfängers wird ein Radius 8 eingeprägt und von der Innenfläche 3 ein Konus 9.

Figur 4 zeigt den zweiten Schritt des erfindungsgemäßen Verfahrens. Im ersten Schritt wird der Stoßfänger auf eine Prägestanz-Vorrichtung (Werkzeug) eingespannt bzw. unverrückbar befestigt. Dieses geschieht nach dem Stand der Technik auf unterschiedliche Weise, z. B. durch Halteplatten, die den Stoßfänger auf ein Widerlager pressen.

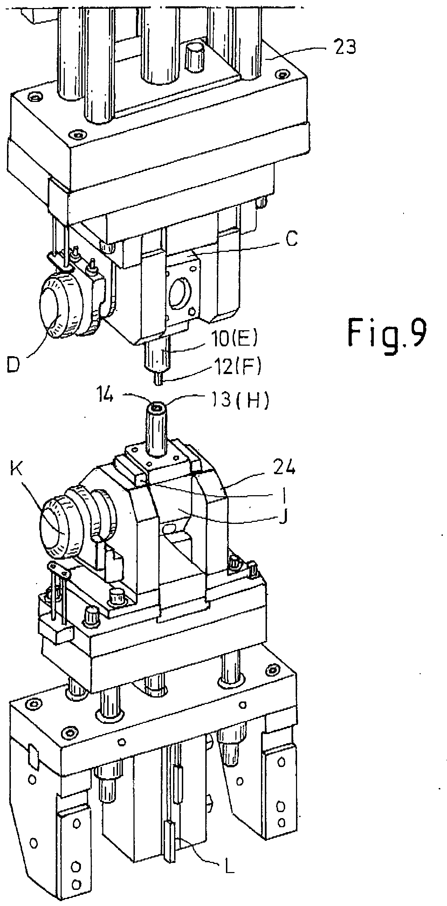

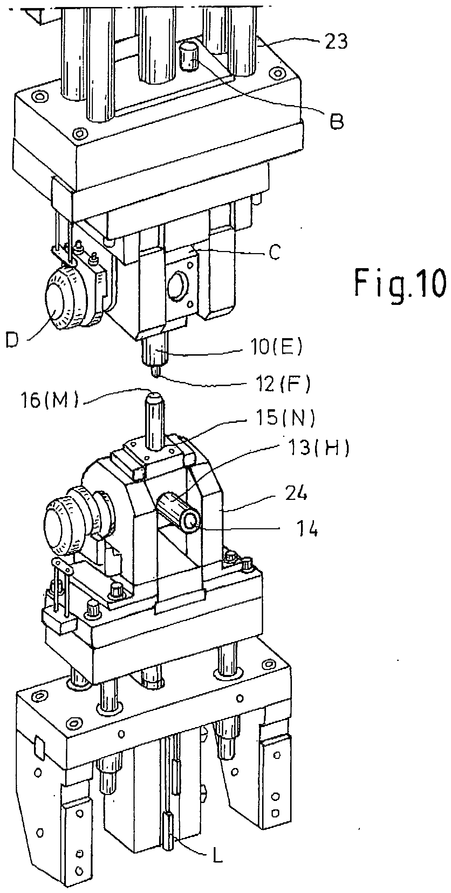

Im bedeutenden wesentlichen zweiten Schritt (siehe auch Figuren 9 bis 11) des erfindungsgemäßen Verfahrens wird über einen Vorlocher 12, auch als Zentrierstift bezeichnet, eine Zentrierbohrung 19, deren Durchmesser kleiner ist als der Endradius 25 des Durchbruchs 4 ist, eingebracht. Der Vorlocher 12 taucht dabei nach Durchstoßen des Stoßfängers in eine Lochführung 14 in der Schnittplatte 13 ein, wodurch eine Zentrierung des Vorlochers 12 erreicht ist.

Während der gesamten weiteren Bearbeitung verbleibt der Zentrierstift, bzw. Vorlocher 12 im Bauteil und sorgt so für ein absolut zentriertes Stanzen und Prägen, wie nachfolgend beschrieben.

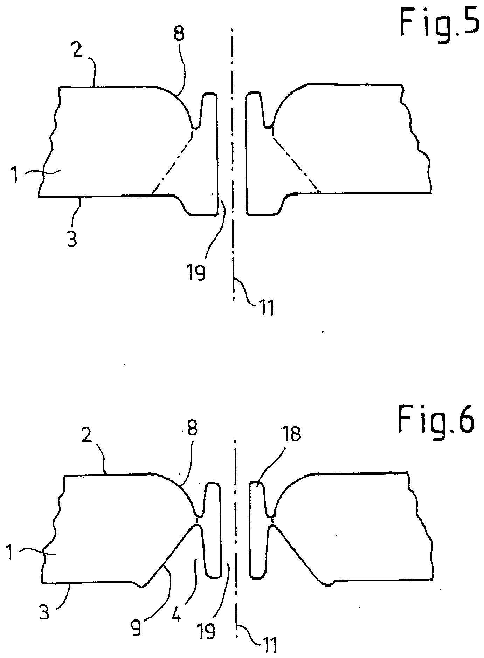

Figur 5 zeigt die Prägung mit einem ersten Prägestempel 10 mit einem Radius 8 auf der Außenfläche des Stoßfängers.

Figur 6 zeigt das Prägen des Konus 9 mit einem zweiten Prägestempel 15 auf der Innenfläche des Stoßfängers.

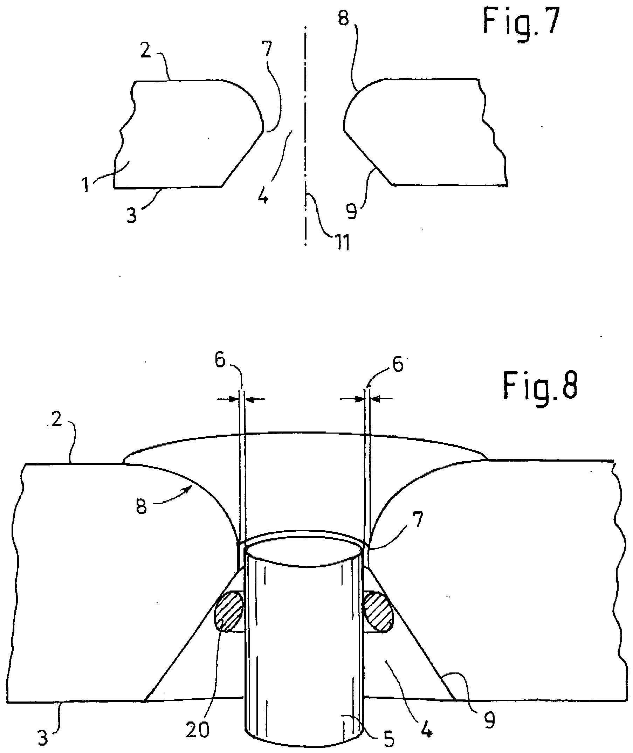

Figur 7 zeigt den Stoßfänger nach dem Ausstanzen des verbleibenden Mittelteils 18 (siehe auch Figur 6).

Figur 8 zeigt einen Ausschnitt aus einem Stoßfänger mit einem Durchbruch 4, der nach dem erfindungsgemäßen Verfahren hergestellt wurde. Außerdem ist noch ein Parksensor als Anbauteil 5 gezeigt, der auf der Innenfläche des Stoßfängers über eine geeignete Halterung befestigt ist und den Stoßfänger im Bereich des Durchbruches 4 nicht berührt. Das Spaltmaß zwischen Parksensor und Stoßfänger lässt sich mit diesem Verfahren durch die Zentrierung der Prägestempel auf 1/₁₀₀ mm genau einstellen. Das Anbauteil 5, bevorzugt ein Sensor liegt über einen Entkopplungsring 20 am freigeschnittenen Konus 9 an.

Erfindungsgemäß bildet der Vorlocher 12 oder Zentrierstift mit dem ersten Prägestempel 10 ein einziges Werkzeug, d. h. am Prägestempel 10 ist zugleich auch der Vorlocher 12 befestigt, wobei zuerst der Vorlocher 12 die Zentrierbohrung 19 einbringt (siehe Figur 4) und nach dem Durchstoßen des Stoßfängers in die Lochführung 14 eintaucht und anschließend der über dem Vorlocher 12 sich befindende erste Prägestempel 10 den Radius 8 bzw. Prägeradius auf der Außenfläehe des Stoßfängers prägt. Die Lochführung 14 ist so tief, dass der Vorlocher 12 auch beim Einbringen des Radius 8 in der Lochführung 14 bleibt. Mit dem Bezugszeichen 26 ist der Zentrierradius bezeichnet.

Die Lochführung 14 ist ebenfalls mit dem zweiten Prägestempel 15 ein Werkzeug, so dass der zweite Prägestempel 15 den Konus 9 auf der Innenfläche 3 des Stoßfängers prägen kann, ohne dass der Vorfocher 12 oder Zentrierstift aus der Lochführung 14 ausbricht.

Bevorzugt wird der Radius 8 zeitlich vor der Prägung des Konus 9 eingebracht.
1) Der Zentrierstift bzw. der Vorlocher 12 der ersten Lochung muss über den gesamten Zeitbereich der Prägung von Oberfläche und Unterfläche im Bauteil verbleiben. Erklärung: Er positioniert Stanzstempel 10 (von oben) und Schnittplatte 13 (von unten) erst in der, für später als "optisch sichtbare Fläche" genutzten Bereich, in der benötigten Genauigkeit. Wenn er rausgezogen würde, federt das Material nach innen zurück und man könnte nur noch mit einem kleineren "Sucherstift" arbeiten, der aber nicht genau genug ist, um den Radius 8 und den Konus 9 exakt übereinander zu prägen. Würde man mit einem Stift gleichen Durchmessers arbeiten, würde es zur Abspaltung eines kleinen "Randstücks" kommen, was als Faden einen Dauereinsatz nicht mehr möglich macht. Man müsste nach allen paar gestanzten Durchbrüchen die Maschine reinigen.
2) Die Prägung der späteren Oberseite bzw. Außenfläche sollte zuerst erfolgen. Erklärung: Es kommt durch die Prägung auf einer Seite natürlich zu einem Druckaufbau auf der gegenüberliegenden Seite. Man muss das Bauteil ja gegen die aufgebrachte Kraft halten. Dies führt zu einer Verdichtung des Materials auf beiden Seiten. Die Seite mit dem Prägeprofil bringt man in Form, auf der Gegenseite jedoch entsteht eine Einfallstelle. Prägt man hingegen die Außenfläche zuerst, wird die Fläche dort definiert verdichtet und ist auch später gegen eine Druckbelastung von der Gegenseite her unempfindlich.
3) Nach der Prägung des Radius 8 auf der Außenfläche 2 muss der Prägestempel 10 bis nach der Prägung der Unterseite bzw. Innenfläche 3 im Eingriff bleiben, das heißt unter Druck gehalten werden. Erklärung: Würde man nicht das Prägeprofil des Radius 8 auf der Außenfläche 3 im Eingriff lassen, käme es zu einer Aufwölbung des Materials, wenn die Unterseite, d.h. Innenfläche 3 geprägt wird.

In den Figuren 9-11 ist eine Prägestanzvorrichtung zur Durchführung des erfindungsgemäßen Verfahrens dargestellt. Mit dem Bezugszeichen 23 ist das Oberteil und mit dem Bezugszeichen 24 das Unterteil bezeichnet.

Folgende Arbeitsabläufe führt diese Prägestanzvorrichtung aus:

| Arb. Abläufe | Pos. | Bemerkung |
|---|---|---|
| 1 | L | Senkrechte Bewegung auf |
| 2 | I | Drehbock verriegelt |
| 3 | A | Senkrechte Bewegung ab |
| 4 | B | Drehbock verriegelt |
| 5 | F | Vorlocher stanzt in G |
| 6 | E | Prägestempel prägt 1 Radius auf H |
| 7 | L | Senkrechte Bewegung ab |
| 8 | I | Drehbock entriegelt |
| 9 | J | Drehbock schwenkt auf M-N |
| 10 | L | Senkrechte Bewegung auf |
| 11 | I | Drehbock verriegelt |
| 12 | M | M zentriert über F |
| 13 | N | prägt Konus |
| 14 | A | Senkrechte Bewegung auf |
| 15 | B | Drehbock entriegelt |
| 16 | C | Drehbock schwenkt auf O - P |
| 17 | A | Senkrechte Bewegung ab |
| 18 | B | Drehbock verriegelt |
| 19 | P | P zentriert über M |
| 20 | O | Stanzstempel stanzt auf N |
| 21 | A | senkrechte Bewegung auf |
| 22 | B | Drehbock entriegelt |

| Arb. Abläufe | Pos. | Bemerkung |
|---|---|---|
| 23 | C | Drehbock schwenkt auf E-F |
| 24 | / | Oberteil in Grundstellung |
| 25 | L | Senkrechte Bewegung ab |
| 26 | I | Drehbock entriegelt |
| 27 | J | Drehbock schwenkt auf G-H |
| 28 | / | Unterteil in Grundstellung |

Im Arbeitsschritt (Arbeitsablauf) 1 erfolgt zuerst eine senkrechte Bewegung aufwärts des Unterteils L der Stanzeinheit bis zum Anschlag der Lochführung (hier als Schnittplatte Vorlocher bezeichnet) an den Stoßfänger. Der Stoßfänger ist hier zur besseren Erklärung nicht gezeigt, befindet sich jedoch eingespannt zwischen dem Oberteil und dem Unterteil der Prägestanz-Vorrichtung.

Anschließend erfolgt im Schritt 2 eine Verriegelung des Drehbockes I. Auf diesem Drehbock I ist ein zweiter Prägestempel mit einer inneren Bohrung als Lochführung angeordnet.

Im Schritt 3 erfolgt eine senkrechte Bewegung abwärts des Oberteils der Prägestanzvorrichtung und im Schritt 4 eine Verriegelung des Drehbockes B, an dem ein erster Prägestempel E mit einem Zentrierstift bzw. Vorlocher F angeordnet ist.

Im Schritt 5 stanzt der Zentrierstift bzw. Vorlocher ein Loch in den Stoßfänger und fährt nach dem Durchstoßen in die innere Bohrung, d.h. die Lochführung im zweiten Prägestempel ein.

### Hierbei prägt der erste Prägestempel E den Prägeradius (Schritt 6)

Anschließend erfolgt im Schritt 7 eine senkrechte Abwärtsbewegung des Unterteils L der Prägestanzvorrichtung und eine Entriegelung des Drehbockes I (Schritt 8) und ein Schwenken des Drehbockes J in eine zweite Arbeitsstellung (Schritt 9), bei der ein Werkzeug zur Konusprägung positioniert wird.

Im Schritt 10 erfolgt eine senkrechte Bewegung aufwärts bis zum Anschlag an den Stoßfänger des Unterteils der Prägestanzvorrichtung.

Im Schritt 11 erfolgt eine Verriegelung des Drehbockes I. Dabei fährt die Lochführung bzw. die innere Bohrung im zweiten Prägestempel in den Zentrierstift am ersten Prägestempel ein, d.h. im Schritt 12 erfolgt eine Zentrierung der Lochführung über den Zentrierstift.

Im Schritt 13 prägt anschließend der zweite Prägestempel den Konus. Während dieses Prägens des Konus bleibt der Zentrierstift in seiner Position. Er darf dabei nicht von seiner Sollstellung abweichen, um eine Zentrierung des zweiten Prägestempels zu erreichen.

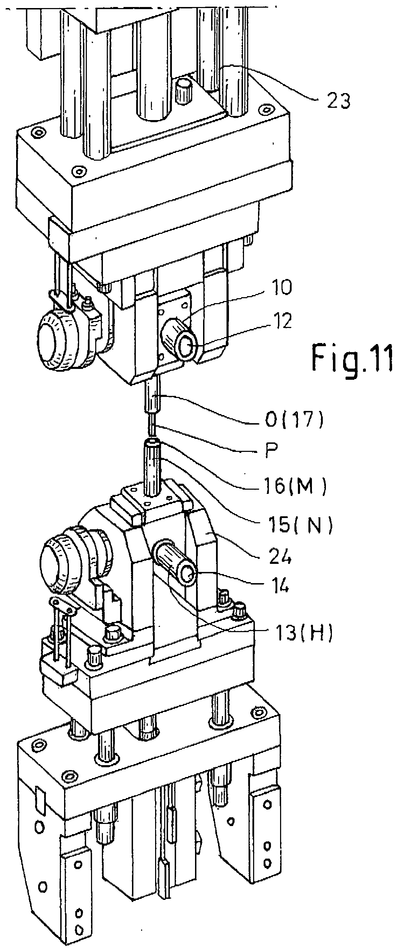

Im Schritt 14 erfolgt eine Aufwärtsbewegung des Oberteils der Prägestanzvorrichtung. Anschließend im Schritt 15 eine Entriegelung des Drehbockes B und ein Schwenken des Drehbockes im Schritt 16 zur Positionierung des Stanzstempels O. (siehe Figur 11).

Im Schritt 17 erfolgt anschließend eine senkrechte Abwärtsbewegung des Oberteils A der Prägestanzvorrichtung und im Schritt 18 wieder eine Verriegelung des Drehbockes.

Im Schritt 19 erfolgt vor dem Ausstanzvorgang erst eine Zentrierung eines Sucherstiftes P am Stanzstempel Ö durch Einführen dieses Sucherstiftes in die Lochführung M.

Im Schritt 20 erfolgt schließlich die Ausstanzung des noch verbliebenen Steges zwischen Prägeradius und Konus.

Auch bei diesem Stanzvorgang erfolgt eine genaue Zentrierung über den Sucherstift, der unterhalb des Stanzstempels angeordnet ist und der in die Lochführung eingreift, bevor der Stanzstempel mit dem Ausstanzen beginnt.

In den Schritten 21 bis 28 erfolgt ein Zurückfahren der Prägestanzvorrichtung in die Ausgangslager (Grundstellung), so dass anschließend mit der Bearbeitung eines anderen Stoßfängers begonnen werden kann.

## Patentansprüche

1. Kunststoffteil (1) mit einer Außenfläche (2) und einer Innenfläche (3) und mit Durchbrüchen (4) höchster Genauigkeit zur Aufnahme eines Anbauteils (5), das über ein exaktes Spaltmaß (6) in die Durchbrüche (4) einsetzbar sein muss, wobei der Übergang von der Durchbruchsinnenfläche (7) zur Außenfläche (2) des Kunststoffteils (1) als Radius (8) ausgebildet ist, und der Übergang von der Durchbruchsinnenfläche (7) zur Innenfläche (3) des Kunststoffteils (1) als Konus (9) ausgebildet ist, **dadurch gekennzeichnet, dass** der Radius (8) eingeprägt ist.

2. Kunststoffteil nach Anspruch 1,
**dadurch gekennzeichnet, dass** das Kunststoffteil (1) ein Stoßfänger für Kraftfahrzeuge und das Anbauteil (5) bevorzugt ein Parksensor ist.

3. Werkzeug zum Prägestanzen eines Durchbruchs (4) in einem Kunststoffteil (1) nach Anspruch 1 oder 2,
**dadurch gekennzeichnet,**
- **dass** das Kunststoffteil mit einer anliegenden Schnittplatte (13) auf dem Werkzeug verankerbar ist,
- **dass** das Werkzeug auf der Außenfläche (2) des Kunststoffteils einen ersten Prägestempel (10) zum Prägen eines Radius (8) mit einem auf seiner Längsachse (11) in Richtung zum Kunststoffteil hervorstehenden Vorlocher (12) zum Einbringen einer Zentrierbohrung (19) aufweist,
- **dass** der Vorlocher (12), bevor der erste Prägestempel (10) in das Kunststoffteil eingreift, auf der zum Kunststoffteil gegenüberliegenden Seite in eine Lochführung (14) in der Schnittplatte (13) einfährt und dadurch der erste Prägestempel (10) beim Prägen zentriert ist,
- **dass** der erste Prägestempel (10) und damit der Vorlocher (12) in seiner Endprägestellung für den Rest des Stanzprägens verankert bleibt,
- **dass** das Werkzeug einen zweiten Prägestempel (15) zum Prägen des Konus (9) auf der Innenfläche (3) des Kunststoffteils aufweist, und der zweite Prägestempel (12) auf seiner Längsachse eine an den Vorlocher (12) angepasste Führungsbohrung (16) aufweist,
- **dass** der zweite Prägestempel (15) mit seiner Führungsbohrung (16) auf den Vorlocher (12) auffahren und danach erst prägend das Kunststoffteil formen kann, und
- **dass** ein Stanzstempel (17) zum Ausstanzen des nach dem Prägen mit den beiden Prägestempeln (10, 15) verbleibenden Mittelteils (18) vorhanden ist.

4. Verfahren zum Prägestanzen von Durchbrüchen in Kunststoffteilen nach Anspruch 1 oder 2 mit einem Werkzeug nach Anspruch 3, **gekennzeichnet durch** folgende Verfahrensschritte:
a) Unverrückbares Einspannen des Kunststoffteils mit einer anliegenden Schnittplatte (13) an der Stelle des vorgesehenen Durchbruchs (4).
b) Einbringen einer Zentrierbohrung (19) **durch** einen Vorlocher (12), dessen Durchmesser kleiner als der kleinste Durchmesser des zu schaffenden Durchbruchs (4) ist.
c) Nach Einbringung der Zentrierbohrung (19) Eintauchen des Vorlochers (12) in eine Lochführung (14) in der Schnittplatte (13).
d) Prägen des Radius (8) **durch** den ersten Prägestempel (10) und Verbleiben des ersten Prägestempels (10) und damit des Vorlochers (12) in seiner Endprägestellung.
e) Auffahren des zweiten Prägestempels (15) mit seiner Führungsbohrung (16) auf den Vorlocher (12) und anschließendes zentriertes Prägen des Konus (9) auf der Innenseite des Kunststoffteils.
f) Ausstanzen des nach dem Prägen mit den beiden Prägestempeln (10, 15) verbleibenden Mittelteils (18).

## Claims

1. Plastic part (1) with an outer surface (2) and an inner surface (3) and with openings (4) of the highest precision for accommodating an attachment (5) which has to be inserted into the opening (4) via an exact gap size (6), wherein the transition from the opening inner surface (7) to the outer surface (2) of the plastic part (1) is in the form of a radius (8), while the transition from the opening inner surface (7) to the inner surface (3) of the plastic part (1) is in the form of a cone (9),
**characterized in that**
the radius (8) is stamped out.

2. Plastic part according to claim 1,
**characterized in that** the plastic part (1) is a bumper for motor vehicles, while the attachment (5) is preferably a parking sensor.

3. Tool for pre-stamping out an opening (4) in a plastic part (1) according to claim 1 or 2,
**characterized in that**
- the plastic part may be anchored on the tool with an adjacent cutting plate (13)
- the tool on the outer surface (2) of the plastic part comprises a first stamping die (10) to stamp out a radius (8) with a pre-punch (12) protruding on its longitudinal axis (11) in the direction of the plastic part for the production of a centering hole (19),
- the pre-punch (12) engages in the plastic part before the first stamping die (10), and moves in a hole guide (14) in the cutting plate (13) on the side lying opposite the plastic part, in order to centre the first stamping die (10) upon stamping,
- the first stamping die (10) along with the pre-punch (12), remain anchored in their final stamping position for the remainder of the stamping,
- the tool has a second stamping die (15) for stamping the cone (9) on the inner surface (3) of the plastic part, while the second stamping die (12) comprises a guide hole (16) on its longitudinal axis adapted to the pre-punch (12),
- the second stamping die (15) may be raised with its guide hole (16) to the pre-punch (12) and only then may the plastic part be formed;
- a stamping die (17) is provided to punch out the middle part (18) remaining after stamping with the two stamping dies (10, 15).

4. Method for pre-punching openings in plastic parts according to claim 1 or 2 with a tool according to claim 3, **characterized by** the following method steps:
a) immovable clamping of the plastic part with an adjacent cutting plate (13) at the location of the provided opening (4).
b) production of a centering bore (19) by a pre-punch (12), the diameter of which is smaller than the smallest diameter of the opening (4) to be produced.
c) after production of the centering hole (19), the pre-punch (12) is introduced in a hole guide (14) in the cutting plate (13).
d) stamping of the radius (8) by the first stamping die (10) and leaving the first stamping die (10) and thus the pre-punch (12) in their final stamping positions.
e) raising the second stamping die (15) with its guide hole (16) to the pre-punch (12) and subsequent centered stamping of the cone (9) on the inner side of the plastic part.
f) stamping out the middle part (18) remaining after stamping with the two stamping dies (10, 15).

## Revendications

1. Pièce en matière plastique (1) avec une surface externe (2) et une surface interne (3) et avec des percées (4) d'une très grande précision pour le logement d'une pièce rapportée (5), qui doit pouvoir être insérée avec un interstice exact (6) dans les percées (4), la transition entre la surface interne de la percée (7) et la surface externe (2) de la pièce en matière plastique (1) étant conçue comme un rayon (8) et la transition entre la surface interne de la percée (7) et la surface interne (3) de la pièce en matière plastique (1) étant conçue sous la forme d'un cône (9), **caractérisée en ce que** le rayon (8) est estampé.

2. Pièce en matière plastique selon la revendication 1,
**caractérisée en ce que** la pièce en matière plastique (1) est un pare-chocs pour véhicules automobiles et la pièce rapportée (5) est de préférence un capteur de stationnement.

3. Outil d'estampage d'une percée (4) dans une pièce en matière plastique (1) selon la revendication 1 ou 2,
**caractérisé en ce que**
- la pièce en matière plastique peut être ancrée avec une plaque de coupe en appui (13) sur l'outil,
- l'outil comprend, sur la surface externe (2) de la pièce en matière plastique, un premier poinçon (10) pour l'estampage d'un rayon (8) avec un pré-aléseur (12) dépassant sur son axe longitudinal (11) en direction de la pièce en matière plastique pour la réalisation d'un alésage central (19),
- le pré-aléseur (12), avant que le premier poinçon (10) entre dans la pièce en matière plastique, pénètre sur le côté opposé à la pièce en matière plastique dans un guidage de trou (14) dans la plaque de coupe (13) et le premier poinçon (10) est ainsi centré lors de l'estampage,
- le premier poinçon (10) et donc le pré-aléseur (12) reste ancré dans sa position d'estampage finale pour r le reste de l'estampage,
- l'outil comprend un deuxième poinçon (15) pour l'estampage du cône (9) sur la surface interne de la pièce en matière plastique et le deuxième poinçon (12) comprend sur son axe longitudinal un alésage de guidage (16) adapté au pré-aléseur (12),
- le deuxième poinçon (15) peut buter avec son alésage de guidage (16) contre le pré-aléseur (12) et peut ensuite former la pièce en matière plastique par estampage et
- un poinçon (17) est prévu pour l'estampage de la partie centrale (18) restante après l'estampage avec les deux poinçons (10, 15).

4. Procédé d'estampage de percées dans des pièces en matière plastique selon la revendication 1 ou 2 avec un outil selon la revendication 3, **caractérisé par** les étapes suivantes :
a) serrage de la pièce en matière plastique avec une plaque de coupe en appui (13) l'endroit de la percée prévue (4).
b) réalisation d'un alésage de centrage (19) à l'aide d'un pré-aléseur (12), dont le diamètre est inférieur au diamètre le plus petit de la percée (4) à réaliser.
c) après la réalisation de l'alésage de centrage (19), insertion du pré-aléseur (12) dans un guidage de trou (14) dans la plaque de coupe (13).
d) estampage du rayon (8) à l'aide du premier poinçon (10) et le premier poinçon (10) et donc le pré-aléseur (12) reste dans sa position d'estampage finale.
e) butée du deuxième poinçon (15) avec son alésage de guidage (16) contre le pré-aléseur (12) puis estampage centré du cône (9) à l'intérieur de la pièce en matière plastique.
f) estampage de la partie restante (18) restant après l'estampage avec les deux poinçons (10, 15).
